# EUROPEAN PATENT APPLICATION

(11) **EP 4 378 564 A1**
(43) Date of publication of application: **05.06.2024**
(21) Application number: 22210574.4
(22) Date of filing: 30.11.2022
(51) Int. Cl.: B01D 53/04, B01D 46/02

(54) **ADSORBER STRUCTURE FOR CAPTURING GASEOUS COMPONENTS FROM A GAS MIXTURE**

(71) Applicant: Dacma GmbH, 22559 Hamburg (DE)
(72) Inventor: Scharrer, Benjamin, 21684 Stade (DE); Spitzner, Jörg, 22559 Hamburg (DE)
(74) Representative: Uexküll & Stolberg

(57) **Abstract**

An adsorber structure (1) for capturing gaseous components from a gas mixture comprises a plurality of sorbent modules (10) each containing a sorbent material. Each sorbent module (10) comprises a front sheet (14), a rear sheet (15) and four side sheets each connecting the front sheet (14) and the rear sheet (15). The front sheet (14) and the rear sheet (15) are oriented parallel to one another and are arranged at a distance from one another, such that the front sheet (14) and the rear sheet (15) together with the four side sheets form a receiving portion for the sorbent material. The front sheet (14) and the rear sheet (15) of each sorbent module (10) are formed by a grid structure which is gas permeable such that the gas mixture permeates through the sorbent module (10) from the front sheet (14) towards the rear sheet (15). The sorbent material is arranged in the receiving portion between the grid structures such that the gaseous components to be captured from the gas mixture streaming through the sorbent module (10) from the front sheet (14) towards the rear sheet (15) are bound to the sorbent material. The adsorber structure (19 comprises a plurality of frames (9) for receiving and supporting the sorbent modules (10). Each frame (9) comprises a plurality of struts (6, 7, 8) which are connected to each other and form a seating for the sorbent modules (10). At least one sorbent module (10) is inserted into each frame (9).

The adsorber structure (1) comprises a release mechanism which is configured to release the sorbent modules (10) from the frame (9) upon manual actuation such that each of the modules (10) is individually detachable from the frame (9).

## Description

### FIELD OF THE INVENTION

The invention relates to an adsorber structure for capturing gaseous components from a gas mixture and to the use of the adsorber structure to capture gaseous components from atmospheric air.

### BACKGROUND OF THE INVENTION

Gaseous components such as carbon dioxide, methane or sulfur dioxide make a substantial contribution to air pollution.

In particular the rising CO₂ concentration in the atmosphere increased the demand for research into CO₂ mitigation technologies. Carbon capture utilization and sequestration strategies have so far focused on capturing CO₂ from point sources such as coal-fired power plants, or natural gas (NG) production wells. However, stationary sources account for only one-third of global emissions. In addition, transportation costs arise when transporting the generated CO₂ from the point sources to plants in order to further process the generated CO₂.

Another strategy to capture CO₂ is directly from the air, often termed direct air capture (DAC). Carbon dioxide capture is achieved when atmospheric air makes contact with chemical media, typically an aqueous alkaline solvent or sorbents and is bound thereto. The chemical media is subsequently stripped of CO₂ through the application of energy (namely heat), resulting in CO₂ that can undergo dehydration and compression, while for example regenerating the chemical media for reuse at the same time.

Typically two main DAC systems are used for the capture of CO₂, namely a high temperature (HT) aqueous solution and a low temperature (LT) solid sorbent. The present invention focuses on the low temperature (LT) solid sorbent which is explained in the following.

Typically, technologies regarding the low temperature (LT) solid sorbent use a reactor comprising the sorbent, where adsorption and desorption (regeneration) happen one after another in cycles. In a first step the reactor is open. Atmospheric air flows through the reactor naturally or with the aid of fans. At ambient temperature, CO₂ chemically binds to the sorbent and CO₂ depleted air leaves the system. This step is completed when the sorbent is fully saturated with CO₂. In a next step, the fans are switched off, the inlet opening of the reactor is closed and the remaining air is optionally swept out through a pressure drop by vacuuming or inserting steam into the reactor. Then, regeneration happens by heating the reactor to a certain temperature, depending on the sorbent. Released CO₂ is collected and transported out of the reactor for purification, compression or utilization. For starting another cycle, the reactor is usually cooled down to ambient conditions. The sorbent determines the specific conditions of the cycles. Several different sorbents were proposed in literature, such as amines, amino-polymers, silica (TRI-PE-MCM-41), potassium carbonate (K₂CO₃) and K₂CO₃/Y₂O₃.

DAC is a relatively new and innovative technology in early commercial stages, which in a long term perspective, along with conventional technologies, can help humankind to control and mitigate climate change. At present the cost for the production of CO₂ using a low temperature (LT) solid sorbent are rather high.

For example WO 2015/185434 A1 discloses a vacuum chamber for a direct air capture process enclosing an interior space for housing an adsorber structure. The vacuum chamber comprises a contiguous circumferential wall structure forming a rectangular or square chamber. The wall structure is closed in an axial direction by an inlet and an outlet axial wall, respectively, each having large circular openings. Both axial walls comprise at least one closing circular stainless steel lid allowing for, in an open position, gas to be circulated through the vacuum chamber for passing an adsorber structure. In a closed position, the lid is adapted to close the interior space and to allow evacuation of the interior space down to pressure of 500 mbar_{abs} or less.

WO 2014/170184 A1 discloses a gas separation unit for the separation of a first gas from a mixture by using a cyclic adsorption/desorption process using a loose particulate sorbent material for gas adsorption. The gas separation unit comprises a rectangular stack of multiple layers which each hold sorbent material. In one embodiment two adjacent stacked layers are arranged, such that gas inlet and outlet channels between the sorbent material layers have a triangular cross section. The gas inlet and outlet channels are formed by stiff frame structures which form the geometrical shape of the sorbent layers. Each sorbent layer comprises two sheets enclosing the sorbent material which are mounted onto the frame structures. One important functionality of the stiff frame structures in this embodiment is the fact that they provide enough surfaces to glue or weld the flexible fabric material to, which in turn provides sufficient tension to the flexible fabric material to hold the sorbent material in a layer with relatively uniform thickness. In case one layer is damaged or the sorbent material of one layer is degraded, the whole rectangular stack of multiple layers has to be replaced.

It is therefore an object of the present invention to provide an adsorber structure for capturing gaseous components from a gas which ensures an improved economic efficiency.

### SUMMARY OF THE INVENTION

The object is achieved with the adsorber structure as defined in present claim 1. Preferred embodiments are set out in the appending sub-claims 2 to 15.

According to the invention, there is provided an adsorber structure for capturing gaseous components from a gas mixture, the adsorber structure comprising a plurality of sorbent modules each containing a sorbent material. Each sorbent module comprises a front sheet, a rear sheet and four side sheets, each connecting the front sheet and the rear sheet. The front sheet and the rear sheet are oriented parallel to one another and are arranged at a distance from one another, such that the front sheet and the rear sheet together with the four side sheets form a receiving portion for the sorbent material. The front sheet and the rear sheet of each sorbent module are formed by a grid structure which is gas permeable such that the gas mixture permeates through the sorbent module from the front sheet towards the rear sheet. The sorbent material is arranged in the receiving portion between the grid structures such that the gaseous components to be captured from the gas mixture streaming through the sorbent module from the front sheet towards the rear sheet are bound to the sorbent material. The adsorber structure comprises a plurality of frames for receiving and supporting the sorbent modules. Each frame comprises a plurality of struts which are connected to each other and form a seating for the sorbent modules. At least one sorbent module is inserted into each frame. The adsorber structure comprises a release mechanism which is configured to release the sorbent modules from the frame upon manual actuation such that each of the modules is individually detachable from the frame.

In case single sorbent modules are damaged they can be individually detached from the frame and can be individually replaced. This reduces downtime of the adsorber structure and increases its cost efficiency. As a result of the replacable sorbent modules the adsorber structure facilitates an easy modification to capture different gaseous component from the gas mixture. For example the frame is capable to receive first sorbent elements containing a first sorbent material which is suitable to capture carbon dioxide from the atmospheric air. Preferably, the frame may also be capable to alternatively receive second sorbent elements containing a second sorbent material which is suitable to capture methane or sulfur dioxide from the atmospheric air. Moreover, as the sorbent modules are individually replaceable sorbent modules comprising different sorbent materials may preferably be inserted into the frames and used together. Preferably, the sorbent material is received in the receiving portion in the form of bulk material. Also preferably, each frame forms a load bearing structure which is adapted to handle the forces acting thereon during the operation of the adsorber structure. In particular the frame is adapted to handle the forces caused by the weight of the sorbent modules and the forces resulting from the gas mixture streaming onto the sorbent modules. The four side sheets of the sorbent modules may preferably also be formed by the grid structure. One of the four side sheets may preferably comprise an opening or may be removable or rotatable as a whole to provide access to the receiving portion in order to fill the sorbent material into the receiving portion.

The adsorber structure according to the present invention is in particular suitable to be used in a cyclic adsorption/desorption process using a loose particulate sorbent material for an adsorption of a gaseous component such as carbon dioxide, methane or sulfur dioxide from a gas mixture, preferably from atmospheric air.

The term parallel with regard to the position of the front sheet relative to the rear sheet also includes deviations from exact parallelism of about up to 5 degrees. These deviations may e.g. be caused by manufacturing tolerances.

In an embodiment of the invention at least two sorbent modules are inserted into each frame. Depending on the size of the adsorber structure and the size of the frames, multiple sorbent modules per frame may facilitate an easier handling of each of the sorbent modules in terms of size and weight of each sorbent module. Preferably, six sorbent modules are inserted into each frame.

In another embodiment of the invention the front sheet and the rear sheet of the sorbent module are arranged at a distance in the range of about 0.5 cm to about 2.5 cm, preferably of about 1 cm to about 2 cm, more preferably of about 1.5 cm, measured transversely to a plane in which the front sheet is located. This range of distances between the front sheet and the rear sheet allows the sorbent modules to be manufactured and filled industrially. Moreover, this range allows a proper handling of the sorbent modules in terms of weight.

In an embodiment of the invention the plurality of sorbent modules are identical in their dimensions. This allows an easy and fast replacement of multiple sorbent modules in an adsorber structure. Moreover, due to the same amount of sorbent material within each sorbent module the life time of the sorbent modules, i.e. until the sorbent material is degraded to a certain degree, is the same. This allows an easy control of the functioning of the sorbent modules as all sorbent modules have to be replaced at the same time.

In another embodiment of the invention the plurality of sorbent modules differ in the distance between the front sheet and the rear sheet of the sorbent modules. Preferably, the streaming velocity of the gas mixture permeating through the sorbent modules is in a range of up to about 0.5 m/s, preferably of about 0.1 m/s to about 0.3 m/s, more preferably of about 0.2 m/s. In case there are pressure differences over the area enclosed by one single frame, multiple sorbent modules comprising for example different thicknesses, i.e. different distances between the front sheet and the rear sheet, may be used to compensate these pressure differences and to provide a constant streaming velocity over the whole area of one frame.

In an embodiment of the invention the grid structure is made from metal. Grid structures of metal are robust and durable and can be reused, e.g. can be refilled with new sorbent material.

In another embodiment of the invention the grid structure is made from an adsorber textile, wherein the adsorber textile is configured to partly adsorb the gaseous components. This increases the overall adsorbing capacity of the sorbent modules.

In an embodiment of the invention the adsorber structure comprises a cylindrical center portion extending along a longitudinal axis from a first end to a second end, a plurality of first struts arranged at the first end and a plurality of second struts arranged at the second end, wherein the first struts and the second struts each extend at a constant angular distance from the center portion in different radial outward directions, wherein the first struts and the second struts are rotated relative to one another around the longitudinal axis such that each first strut at the first end is positioned between two adjacent second struts at the second end when looking along the longitudinal axis from the first end toward the second end of the center portion. In other words: the first struts and the second struts are rotated relative to one another around the longitudinal axis such that each first strut at the first end is positioned between two adjacent second struts at the second end when projecting the first and second struts into one single plane which extends transversely to the longitudinal axis of the center portion.

In another embodiment of the invention the adsorber structure further comprises third struts which connect each first strut with the respective two adjacent second struts and, wherein the first strut, one of the respective adjacent second struts and the third strut connecting the first and the respective second strut form one of the plurality of frames. Thus, the one or more sorbent modules inserted into each frame together extend over the total length of the center portion from the first end to the second end. This provides an optimized adsorbing surface.

In an embodiment of the invention a gap between adjacent frames extending from two circumferentially adjacent first struts at the first end of the center portion tapers towards the corresponding second strut at the second end of the center portion such that a gas mixture streaming from the first end to the second end of the center portion penetrates the sorbent modules inserted into adjacent frames. Preferably, the gas mixture penetrates each of the sorbent modules once. Preferably, the gas mixture enters the adsorber structure through the tapering gap, permeates through the respective sorbent module from the front sheet towards the rear sheet and exits the adsorber structure towards the second end of the center portion. Preferably, the gas mixture exits the adsorber structure through a gap between adjacent frames which widens when looking from the first end towards the second end of the center portion.

In another embodiment of the invention the adsorber structure is configured to be inserted into a housing of a reactor for separating gaseous components such as carbon dioxide, methane or sulfur dioxide from a gas mixture, wherein the adsorber structure is configured to support the housing of the reactor. Preferably, the adsorber structure is part of the load bearing structure of the housing such that the adsorber structure supports the housing and takes loads acting on the housing. Thus, the wall thicknesses of the housing and thus the weight of the housing can be reduced. Reducing the weight of the housing also reduces the heat capacity of the housing and thus the energy needed to heat up the reactor to a temperature for regenerating the sorbent modules during a desorption mode of the reactor. Optionally, the housing has a cylindrical shape.

In an embodiment of the invention the adsorber structure further comprises sealing elements arranged on the third struts and being configured to seal the third struts against the inner wall of the housing. The sealing elements prohibit that the gas mixture entering the adsorber structure bypasses a frame and the sorbent modules inserted therein by streaming between the connecting element and the housing.

In another embodiment of the invention each of the first struts at the first end of the center portion and the second struts at the second end of the center portion comprise a cross sectional area oriented transversely to the radial outward extension of the struts, wherein the cross sectional area of each of the first struts and the second struts has a triangular shape or a U-shape. A triangular or a U-shaped cross sectional area forms a flow-optimized cross section which reduces the flow resistance of the first and second struts.

In an embodiment of the invention the first struts are oriented in such a way that the cross sectional areas of the first struts widen when looking along the longitudinal axis from the first end toward the second end of the center portion, and wherein the second struts are oriented in such a way that the cross sectional areas of the second struts taper when looking along the longitudinal axis from the first end toward the second end of the center portion. This provides a flow-optimized entrance of the gas mixture into as well as a flow-optimized exit of the gas mixture out of the adsorber structure. The wording when looking along the longitudinal axis from the first end toward the second end of the center portion is to be understood as in a direction along the longitudinal axis from the first end toward the second end of the center portion.

The above object is also achieved with a use of the adsorber structure of the present invention to capture gaseous components such as carbon dioxide, methane or sulfur dioxide from atmospheric air. Preferably, the adsorber structure is inserted in a housing of a reactor which is positioned in a 20ft or 40ft ISO standardized and derivative intermodal shipping containers transverse to the longitudinal direction of the container. This allows an easy and fast worldwide transport and installation of the reactor. Optionally, multiple reactors, such as six, eight, twelve, fourteen or twenty reactors, are arranged in one container. The reactors may be arranged on different levels in the container, such as e.g. on a lower level and on an upper level. Preferably, peripheral components for operating the one or more reactors, such as an evaporator and/or a vacuum pump, may be arranged in a separate 20ft or 40ft ISO standardized and derivative intermodal shipping container. The container containing the peripheral components may be arranged on top or below of the container comprising the one or more reactors.

### BRIEF DESCRIPTION OF THE FIGURES

The invention will now be described in connection with an exemplary embodiment shown in the Figures in which:
- Figure 1: shows a perspective view of an adsorber structure according to the present invention,
- Figure 2: shows a schematic view of a frame of the adsorber structure according to Figure 1 and
- Figure 3: shows a schematic view of a sorbent module.

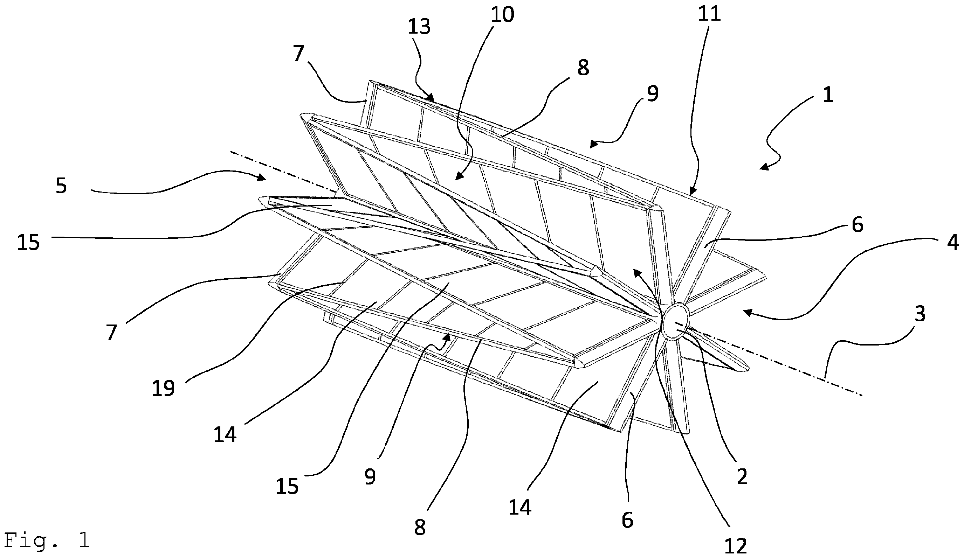

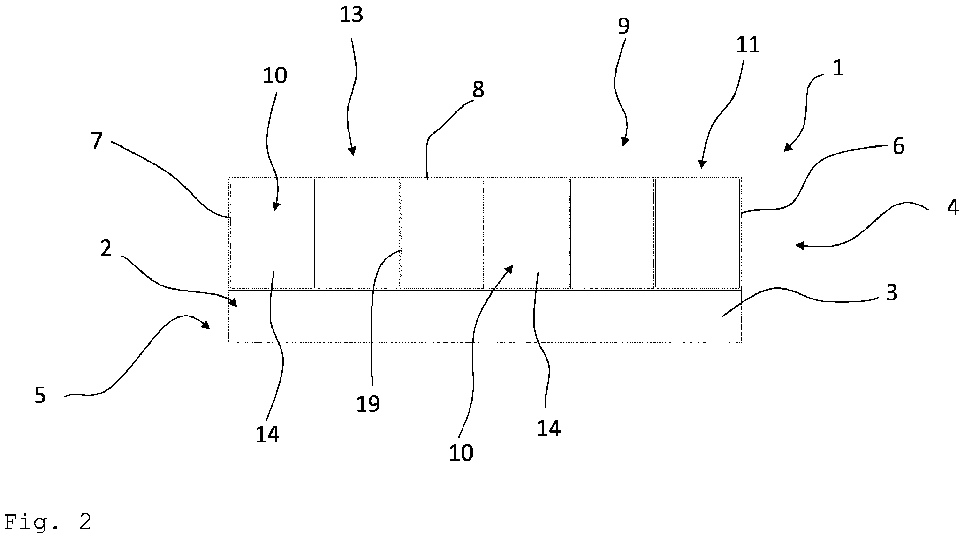

Figures 1 and 2 show an adsorber structure 1 which is used to capture gaseous components such as carbon dioxide, methane or sulfur dioxide from a gas mixture, e.g. atmospheric air in a cyclic adsorption/desorption process using a loose particulate sorbent material. The adsorber structure 1 is configured to be inserted into a housing of a reactor (not shown), wherein the adsorber structure 1 is configured to support the housing of the reactor.

A reactor and the housing thereof in which the adsorber structure 1 according to the present invention is configured to be inserted are for example disclosed in parallel European Patent Application No. 22210535.5 to which reference is made in its entirety.

The adsorber structure 1 comprises a cylindrical center portion 2 extending along a longitudinal axis 3 from a first end 4 to a second end 5. The adsorber structure 1 further comprises a plurality of first struts 6 arranged at the first end 4 and a plurality of second struts 7 arranged at the second end 5. The first struts 6 and the second struts 7 each extend at a constant angular distance from the center portion 2 in different radial outward directions. The first struts 6 and the second struts 7 are rotated relative to one another around the longitudinal axis 3 such that each first strut 6 at the first end 4 is positioned between two adjacent second struts 7 at the second end 5 when looking along the longitudinal axis 3 from the first end 4 toward the second end 5 of the center portion 2.

The adsorber structure 1 further comprises third struts 8 which connect each first strut 6 with the respective two adjacent second struts 7. The first strut 6, one of the respective adjacent second struts 5 and the third strut 8 connecting the first and the respective second strut 6, 7 form one of a plurality of frames 9 for receiving and supporting one or more sorbent modules 10. At least one of the sorbent modules 10 is inserted into each frame 9, wherein each sorbent module 10 contains a sorbent material (not shown). According to the embodiment of the adsorber structure 1 as shown in particular in Fig. 2 six sorbent modules 10 are inserted into each frame 9. Depending on the number of sorbent modules 10 inserted into each frame 9, each frame 9 may comprises one or more fourth struts 19 extending from the center portion 2 in radial direction to the third strut 8. The fourth struts 19 are adapted to additionally support the sorbent modules 10. In case two sorbent modules 10 are inserted into each frame 9, each frame 9 comprises one fourth strut 19 located between the two sorbent modules 10. In case three sorbent modules 10 are used, the frame comprises two fourth struts 19. In other words: The number of fourth struts 19 per frame 9 equals the number of sorbent modules 10 inserted into the frame 9 minus 1.

The adsorber structure 1 comprises a release mechanism 11 which is configured to release the sorbent modules 10 from the frame 9 upon manual actuation such that each of the sorbent modules 10 is individually detachable from the frame 9. The release mechanism 11 is for example formed by screws (not shown) by use of which each of the sorbent modules 10 is fixed to the frame 9. Alternatively, the release mechanism 11 may be formed by one or more releasable snap-in connections (not shown) between the sorbent modules 10 and the frame 9.

A gap 12 between adjacent frames 9 (see Fig. 1) extending from two circumferentially adjacent first struts 6 at the first end 4 of the center portion 2 tapers towards the corresponding second strut 7 at the second end 5 of the center portion 2 such that a gas mixture streaming from the first end 4 to the second end 5 of the center portion 2 penetrates the sorbent modules 10 inserted into adjacent frames 9.

Each of the first struts 6 at the first end 4 of the center portion 2 and the second struts 7 at the second end 2 of the center portion 2 comprise a cross sectional area oriented transversely to the radial outward extension of the struts 6, 7. The cross sectional area of each of the first struts 6 and the second struts 7 has a triangular shape or U shape.

The first struts 6 are oriented in such a way that the cross sectional areas of the first struts 6 widen when looking along the longitudinal axis 3 from the first end 4 toward the second end 5 of the center portion 2. The second struts 7 are oriented in such a way that the cross sectional areas of the second struts 7 taper when looking along the longitudinal axis 3 from the first end 4 toward the second end 5 of the center portion 2.

The adsorber structure 1 further comprises sealing elements 13 arranged on the third struts 8. The sealing elements 13 are configured to seal the third struts 8 against the inner wall of the housing of a reactor (not shown), when the adsorber structure 1 is inserted into a reactor.

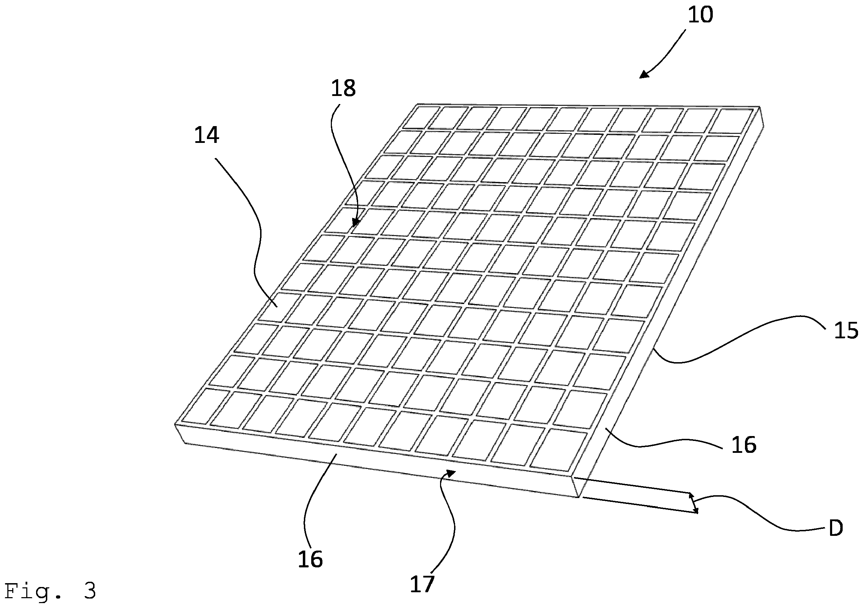

Fig. 3 shows the sorbent modules 10 in detail. Each sorbent module 10 comprises a front sheet 14, a rear sheet 15 and four side sheets 16 each connecting the front sheet 14 and the rear sheet 15. The front sheet 14 and the rear sheet 15 are oriented parallel to one another and are arranged at a distance D from one another, such that the front sheet 14 and the rear sheet 15 together with the four side sheets 16 form a receiving portion 17 for the sorbent material. The front sheet 14 and the rear sheet 15 of the sorbent module 10 are arranged at the distance D in the range of 0.5 cm to 2.5 cm, preferably of 1 cm to 2 cm, more preferably of 1.5 cm, measured transversely to a plane in which the front sheet 14 is located.

The front sheet 14 and the rear sheet 15 of each sorbent module 10 are formed by a grid structure 18 which is gas permeable such that the gas mixture permeates through the sorbent module 10 from the front sheet 14 towards the rear sheet 15. The grid structure 18 is preferably, made from metal. Alternatively, the grid structure 18 is made from an adsorber textile, wherein the adsorber textile is configured to partly adsorb the gaseous components. The four side sheets 16 may also be formed by the grid structure.

The sorbent material is arranged in the receiving portion 17 between the grid structures 18 such that the gaseous components to be captured from the gas mixture streaming through the sorbent module 10 from the front sheet 14 towards the rear sheet 15 are bound to the sorbent material. Preferably, the sorbent material is in the form of bulk material. Preferably, one of the side sheets 16 comprises an opening for filling sorbent material into the receiving portion 17.

The plurality of sorbent modules 10 are identical in their dimensions. Alternatively, the plurality of sorbent modules 10 may differ in the distance D between the front sheet 14 and the rear sheet 15 of the sorbent modules 10 to e.g. balance pressure differences within the reactor.

### Reference Numerals

- 1: Adsorber structure
- 2: Center portion
- 3: Longitudinal axis
- 4: First end (center portion)
- 5: Second end (center portion)
- 6: First struts
- 7: Second struts
- 8: Third struts
- 9: Frame
- 10: Sorbent module
- 11: Release mechanism
- 12: Gap
- 13: Sealing elements
- 14: Front sheet (sorbent module)
- 15: Rear sheet (sorbent module)
- 16: Side sheets (sorbent module)
- D: Distance (between front and rear sheets)
- 17: Receiving portion (sorbent module)
- 18: Grid structure (sorbent module)
- 19: Fourth struts

## Claims

1. An adsorber structure for capturing gaseous components from a gas mixture, the adsorber structure (1) comprising a plurality of sorbent modules (10) each containing a sorbent material,
wherein each sorbent module (10) comprises a front sheet (14), a rear sheet (15) and four side sheets (16) each connecting the front sheet (14) and the rear sheet (15), wherein the front sheet (14) and the rear sheet (15) are oriented parallel to one another and are arranged at a distance (D) from one another, such that the front sheet (14) and the rear sheet (15) together with the four side sheets (16) form a receiving portion (17) for the sorbent material,
wherein the front sheet (14) and the rear sheet (15) of each sorbent module (10) are formed by a grid structure (18) which is gas permeable such that the gas mixture permeates through the sorbent module (10) from the front sheet (14) towards the rear sheet (15),
wherein the sorbent material is arranged in the receiving portion (17) between the grid structures (18) such that the gaseous components to be captured from the gas mixture streaming through the sorbent module (10) from the front sheet (14) towards the rear sheet (15) are bound to the sorbent material,
wherein the adsorber structure (1) comprises a plurality of frames (9) for receiving and supporting the sorbent modules (10),
that each frame (9) comprises a plurality of struts (6, 7, 8) which are connected to each other and form a seating for the sorbent modules (10),
wherein at least one sorbent module (10) is inserted into each frame (9),
**characterized in**
**that** the adsorber structure (1) comprises a release mechanism (11) which is configured to release the sorbent modules (10) from the frame (9) upon manual actuation such that each of the sorbent modules (10) is individually detachable from the frame (9).

2. The adsorber structure of claim 1, wherein at least two, preferably five to six sorbent modules (10) are inserted into each frame (9).

3. The adsorber structure of any of the preceding claims, wherein the front sheet (14) and the rear sheet (15) of the sorbent module (10) are arranged at a distance (D) in the range of about 0.5 cm to about 2.5 cm, preferably of about 1 cm to about 2 cm, more preferably of about 1.5 cm, measured transversely to a plane in which the front sheet (14) is located.

4. The adsorber structure of any of the preceding claims, wherein the plurality of sorbent modules (10) are identical in their dimensions.

5. The adsorber structure of any of claims 1 to 3, wherein the plurality of sorbent modules (10) differ in the distance (D) between the front sheet (14) and the rear sheet (15) of the sorbent modules (10).

6. The adsorber structure of any of the preceding claims, wherein the grid structure (18) is made from metall.

7. The adsorber structure of any of claims 1 to 5, wherein the grid structure (18) is made from an adsorber textile, wherein the adsorber textile is configured to partly adsorb the gaseous components.

8. The adsorber structure of any of the preceding claims, wherein the adsorber structure (1) comprises a cylindrical center portion (2) extending along a longitudinal axis (3) from a first end (4) to a second end (5), a plurality of first struts (6) arranged at the first end (4) and a plurality of second struts (7) arranged at the second end (5), wherein the first struts (6) and the second struts (7) each extend at a constant angular distance from the center portion (2) in different radial outward directions, wherein the first struts (6) and the second struts (7) are rotated relative to one another around the longitudinal axis (3) such that each first strut (6) at the first end (4) is positioned between two adjacent second struts (7) at the second end (5) when looking along the longitudinal axis (3) from the first end (4) toward the second end (5) of the center portion (2).

9. The adsorber structure of claim 8, wherein the adsorber structure (1) further comprises third struts (8) which connect each first strut (6) with the respective two adjacent second struts (7) and, wherein the first strut (6), one of the respective adjacent second struts (7) and the third strut (8) connecting the first and the respective second strut (6, 7) form one of the plurality of frames (9).

10. The adsorber structure of claim 9, wherein a gap (10) between adjacent frames (9) extending from two circumferentially adjacent first struts (6) at the first end (4) of the center portion (2) tapers towards the corresponding second strut (7) at the second end (5) of the center portion (2) such that a gas mixture streaming from the first end (4) to the second end (5) of the center portion (2) penetrates the sorbent modules (10) inserted into adjacent frames (9).

11. The adsorber structure of any of the preceding claims, wherein the adsorber structure (1) is configured to be inserted into a housing of a reactor for separating gaseous components from a gas mixture, wherein the adsorber structure (19 is configured to support the housing of the reactor.

12. The adsorber structure of claims 9 and 13, wherein the adsorber structure (1) further comprises sealing elements (13) arranged on the third struts (8) and being configured to seal the third struts (8) against the inner wall of the housing.

13. The adsorber structure of any of the preceding claims, wherein each of the first struts (6) at the first end (4) of the center portion (2) and the second struts (7) at the second end (5) of the center portion (2) comprise a cross sectional area oriented transversely to the radial outward extension of the struts (6, 7), wherein the cross sectional area of each of the first struts (6) and the second struts (7) has a triangular shape or a U-shape.

14. The adsorber structure of claim 14, wherein the first struts (6) are oriented in such a way that the cross sectional areas of the first struts (6) widen when looking along the longitudinal axis (3) from the first (4) end toward the second end (5) of the center portion (2), and wherein the second struts (7) are oriented in such a way that the cross sectional areas of the second struts (7) taper when looking along the longitudinal axis (3) from the first end (4) toward the second end (5) of the center portion (2).

15. A use of the adsorber structure of any the preceding claims to capture gaseous components from atmospheric air.
